# EUROPÄISCHE PATENTSCHRIFT

(11) **EP 1 165 284 B1**
(45) Veröffentlichungstag und Bekanntmachung des Hinweises auf die Patenterteilung: **29.01.2003**
(21) Anmeldenummer: 00912591.5
(22) Anmeldetag: 10.03.2000
(51) Int. Cl.: B23Q 3/12, B23B 31/28, B23C 5/26

(54) **VORRICHTUNG ZUM SPANNEN VON WERKZEUGEN**
DEVICE FOR CLAMPING TOOLS
DISPOSITIF POUR SERRER DES OUTILS

(30) Priorität: 06.04.1999 DE 19915412
(43) Veröffentlichungstag der Anmeldung: 02.01.2002
(73) Patentinhaber: INNOVAT Gesellschaft für Sondermaschinenbau, Mess- und Steuerungstechnik mbH, 77963 Schwanau (DE); Bilz Werkzeugfabrik GmbH & Co. KG, 73760 Ostfildern (DE)
(72) Erfinder: IRION, Ingo, D-77963 Schwanau (DE); VOSS, Michael, D-71229 Leonberg (DE)
(74) Vertreter: Wolf, Eckhard, Dr.-Ing.
(86) Internationale Anmeldenummer: EP0002123
(87) Internationale Veröffentlichungsnummer: WO00059676

(56) Entgegenhaltungen:
- EP-A- 0 406 782
- CH-A- 29 334
- DD-A- 96 427
- SOVIET INVENTIONS ILLUSTRATED Week 8333, 28. September 1983 (1983-09-28) Derwent Publications Ltd., London, GB; Page 19, AN 83-740000 XP002901098 & SU 965 617 A (KUIB BEARING IND)

## Beschreibung

Die Erfindung betrifft eine Vorrichtung zum Ein- und Ausspannen von einen Werkzeugschaft aufweisenden Werkzeugen in einer Werkzeugaufnahme, die eine an ihrem freien Ende offene Hülsenpartie aus elektrisch leitendem Werkstoff zur reibschlüssigen Aufnahme des Werkzeugschafts aufweist, mit einer die Hülsenpartie der Werkzeugaufnahme umfassenden, mit einem vorzugsweise hochfrequenten Wechselstrom beaufschlagbaren, als Ring- oder Zylinderspule ausgebildeten Induktionsspule zum Erwärmen der Hülsenpartie. Eine solche Vorrichtung ist beispielsweise aus der US-A-5,311,654 bekannt.

Vorrichtungen dieser Art sind dazu bestimmt, das beispielsweise als Fräser oder Bohrer ausgebildete Werkzeug in die Werkzeugaufnahme einzuspannen oder aus dieser auszuspannen. Hierzu wird die Werkzeugaufnahme mit Hilfe der Induktionsspule im Bereich der Hülsenpartie erwärmt, so daß sich die Bohrung der Hülsenpartie vergrößert. Das Werkzeug wird mit seinem Schaft in die durch die Erwärmung vergrößerte Aufnahme eingeführt. Beim anschließenden Abkühlen der Hülsenpartie wird der Werkzeugschaft in der durch die Abkühlung geschrumpften Bohrung der Hülsenpartie reibschlüssig gehalten. Die Durchmesser des Werkzeugschafts und der Hülsenpartie sind dabei so gewählt, daß beim Abkühlen eine kraftschlüssige und verdrehfeste Verbindung entsteht, die beim schnellen Drehen aufgrund der Fliehkräfte nicht gelöst wird. Zum Ausspannen wird die Hülsenpartie erneut durch die Induktionsspule erwärmt, bis das Werkzeug aus der Aufnahme herausgezogen werden kann. Das Ausspannen ist nur deshalb möglich, weil die Erwärmung sich von außen nach innen ausbreitet, so daß zunächst die Hülsenpartie erwärmt wird, bevor die Wärme auf den eingespannten Werkzeugschaft gelangt. Dadurch wird erreicht, daß sich zunächst der Hülsenabschnitt dehnt, so daß das noch kältere Werkzeug beim Ausspannen aus der Aufnahme gelöst werden kann. Dies funktioniert jedoch nur dann, wenn Werkzeuge mit geringer thermischer Ausdehnung und/oder mit niedriger elektrischer Leitfähigkeit, beispielsweise aus Hartmetall oder Keramik verwendet werden. Bei der Verwendung von Einsteckwerkzeugen aus Werkzeugstahl kommt es dagegen immer wieder zu Problemen beim Ausspannvorgang.

Der Erfindung liegt daher die Aufgabe zugrunde, die bekannte Vorrichtung der eingangs angegebenen Art dahingehend zu entwickeln, daß auch Werkzeuge mit größerer thermischer Ausdehnung und/oder aus elektrisch leitfähigem Material mit Hilfe der Induktionsheizung zuverlässig ein- und ausgespannt werden können.

Zur Lösung dieser Aufgabe wird gemäß der Erfindung die im Patentanspruch 1 angegebene Merkmalskombination vorgeschlagen. Vorteilhafte Ausgestaltungen und Weiterbildungen der Erfindung ergeben sich aus den Unteransprüchen.

Der erfindungsgemäßen Lösung liegt die Erkenntnis zugrunde, daß Werkzeuge aus elektrisch leitfähigem Material durch den nicht unerheblichen Streuanteil der herkömmlichen Induktionsspulen im Bereich ihrer Einspannstelle so schnell aufgeheizt werden, daß das Ausspannen erschwert oder unmöglich gemacht wird. Um dies zu verhindern, wird gemäß der Erfindung vorgeschlagen, die elektromagnetischen Streufelder im Bereich des freien Endes der Hülsenpartie soweit herabzusetzen, daß eine Aufheizung des in der Werkzeugaufnahme befindlichen Werkzeugs vermieden wird. Gemäß der Erfindung wird dies dadurch erreicht, daß die Induktionsspule an ihrer dem freien Ende der Hülsenpartie benachbarten Stirnseite durch einen eine zentrale Durchtrittsöffnung für das Werkzeug aufweisenden Polschuh aus magnetisch leitendem und elektrisch nicht leitendem Werkstoff abgeschlossen ist. Mit diesen Maßnahmen wird erreicht, daß die magnetischen Feldlinien an der betreffenden Stirnseite der Induktionsspule im Polschuh konzentriert werden, so daß auch der über die Werkzeugaufnahme überstehende Teil des Werkzeugs wirksam gegenüber elektromagnetischen Streufeldem abgeschirmt wird.

Eine besonders wirksame Abschirmung wird dadurch erzielt, daß der Polschuh das freie Ende der Hülsenpartie teilweise übergreift und gegen das freie Ende der Hülsenpartie axial und/oder radial anliegt. Die Durchtrittsöffnung im Polschuh weist gegenüber dem Werkzeugdurchmesser Übermaß auf, so daß zum Werkzeug hin ein Luftspalt mit hohem magnetischen Widerstand entsteht. Eine weitere Verbesserung in dieser Hinsicht wird dadurch erzielt, daß der Polschuh einen zur Durchtrittsöffnung hin partiell verjüngenden Querschnitt aufweist.

Der Polschuh kann als Ringscheibe ausgebildet sein, die eine zur Durchtrittsöffnung konzentrische konische Eindrehung aufweisen kann. Grundsätzlich ist es auch möglich, daß der Polschuh durch mehrere, speichenartig angeordnete Radialstege gebildet ist.

Um bei möglichst geringer elektrischer Leistung eine rasche Erwärmung der Hülsenpartie zu erzielen, wird gemäß einer weiteren vorteilhaften Ausgestaltung der Erfindung vorgeschlagen, daß die Induktionsspule an ihrer dem Polschuh gegenüberliegenden Stirnseite und/oder an ihrer äußeren Mantelfläche zusätzlich eine magnetische Abschirmung aus magnetisch leitendem und elektrisch nicht leitendem Werkstoff trägt. Die stimseitige magnetische Abschirmung kann dabei als Ringscheibe mit einer Durchtrittsöffnung für die Hülsenpartie der Werkzeugaufnahme ausgebildet sein. Alternativ dazu kann die stimseitige magnetische Abschirmung auch durch mehrere speichenartig angeordnete Radialstege gebildet sein. Die mantelseitige Abschirmung ist zweckmäßig als Zylinderkäfig ausgebildet, der entweder in Umfangsrichtung geschlossen ist oder aus mehreren in Umfangsrichtung im Abstand voneinander angeordneten achsparallelen Stegen gebildet sein kann.

Zur besseren Zentrierung der Induktionsspule gegenüber der Hülsenpartie ist es von Vorteil, wenn der Polschuh einen zur Durchtrittsöffnung konzentrischen, ringförmigen Zentrieransatz zur Aufnahme des freien Endes der Hülsenpartie und/oder zur Abstützung in der Ringöffnung der Induktionsspule aufweist.

Um bei gegebener Heizleistung die Stromstärke möglichst klein zu halten, wird gemäß einer weiteren vorteilhaften Ausgestaltung der Erfindung vorgeschlagen, daß die Induktionsspule eine vorzugsweise mehrlagig gewickelte Spulenwicklung aus einer Hochfrequenz-Litze aufweist. Es hat sich gezeigt, daß in diesem Falle die sonst übliche Wasserkühlung der Spulenwicklung entbehrlich ist. Da der Aufheizvorgang nur wenige Sekunden erfordert, reicht gegebenenfalls eine Konvektionskühlung über die Umgebungsluft aus. Bei höheren Leistungsanforderungen kann die Spulenwicklung erforderlichenfalls mit Luft zwangsgekühlt werden.

Die Induktionsspule weist zweckmäßig einen Spulenkörper aus keramischem Material auf, der zugleich als Träger für den Polschuh und/oder die magnetischen Abschirmungen verwendet werden kann.

Untersuchungen haben gezeigt, daß die Hülsenpartie in der Nähe ihres freien Endes weniger schnell aufgeheizt wird, als im mittleren Bereich. Um Fügeprobleme zu vermeiden, ist es deshalb von Vorteil, wenn die Hülsenpartie eine Paßbohrung zur Aufnahme des Werkzeugschafts aufweist, an die sich zum freien Ende hin ein Abschnitt größeren Durchmessers anschließt. Die Hülsenpartie kann dabei eine zylindrische oder kegelstumpfförmige Außenfläche aufweisen.

Die Werkzeugaufnahme kann entweder unmittelbar an einer schnelldrehenden Maschinenspindel angeordnet sein. Alternativ dazu kann die Werkzeugaufnahme ein die Hülsenpartie tragendes, mit einer schnelldrehenden Maschinenspindel verbindbares Kupplungselement tragen.

Die Werkzeugaufnahme und die Induktionsspule werden nur zum Zwecke des Ein- und Ausspannens in die eingangs beschriebene Lage zueinander gebracht. Um eine einfache Handhabung zu ermöglichen, ist es von Vorteil, wenn die Werkzeugaufnahme und die Induktionsspule relativ zueinander bewegbar sind.

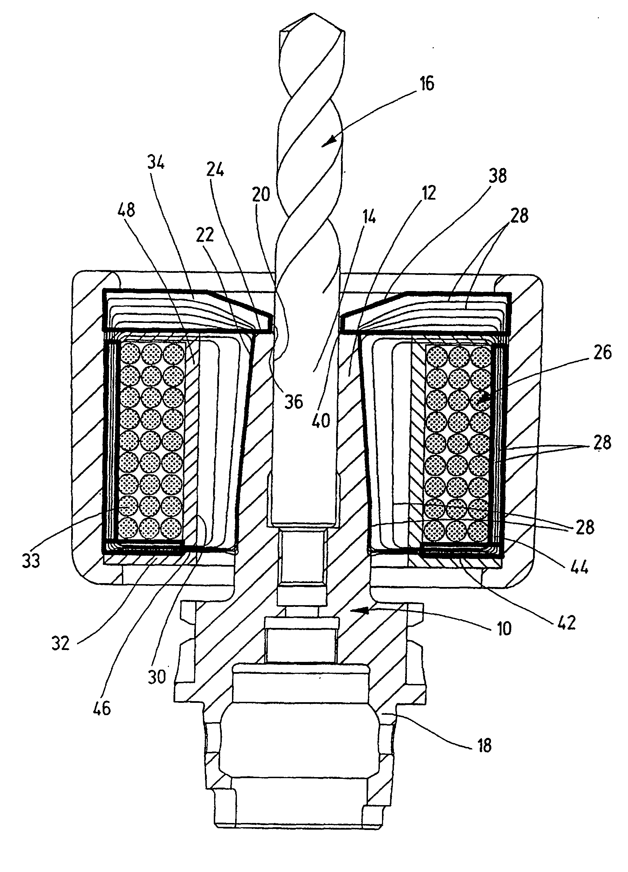

Im folgenden wird die Erfindung anhand eines in der Zeichnung in schematischer Weise dargestellten Ausführungsbeispiels näher erläutert. Die einzige Figur zeigt einen Schnitt durch eine Vorrichtung zum Ein- und Ausspannen eines Werkzeugs in einer Werkzeugaufnahme mit einer als Induktionsspule ausgebildeten Heizvorrichtung.

Die in der Zeichnung dargestellte Werkzeugaufnahme 10 weist eine an ihrem freien Ende offene Hülsenpartie 12 zur reibschlüssigen Aufnahme des Werkzeugschafts 14 eines als Spiralbohrer ausgebildeten Werkzeugs 16 auf. Die Werkzeugaufnahme 10 ist bei dem gezeigten Ausführungsbeispiel als Adapter ausgebildet, der an seinem rückwärtigen Ende ein als Hohlschaft mit kegelförmiger Außenfläche ausgebildetes Kupplungselement 18 für den Anschluß an eine nicht dargestellte, schnelldrehende Maschinenspindel aufweist. Die Hülsenpartie 12 weist eine Paßbohrung 20 für den zylindrischen Werkzeugschaft 14 sowie eine kegelstumpfförmige Mantelfläche 22 auf. Stirnseitig ist die Hülsenpartie 12 durch eine umlaufende Ringfläche 24 begrenzt. Der Durchmesser der Paßbohrung weist bei Umgebungstemperatur gegenüber dem Werkzeugschaft 14 Untermaß auf. Das Ein- und Ausspannen des Werkzeugs 16 ist daher nur bei erhöhter Temperatur der Hülsenpartie 12 bis ca. 450°C möglich.

Die Erwärmung der Hülsenpartie 12 erfolgt mit Hilfe einer Induktionsspule 26, die mit einem hochfrequenten Wechselstrom beaufschlagbar ist. Die Hülsenpartie 12 besteht zu diesem Zweck aus einem elektrisch leitenden Material, in das die Feldlinien 28 der Induktionsspule 26 im Mantelbereich eindringen und durch Erzeugung von Wirbelströmen zu einer Erwärmung führen. Die Werkzeugaufnahme wird zu diesem Zweck mit ihrer Hülsenpartie 12 in die zentrale Öffnung 30 der als Zylinderspule ausgebildeten Induktionsspule 26 eingeführt. Die Induktionsspule enthält einen aus keramischem Material bestehenden Spulenkörper 32. Auf dem Spulenkörper befindet sich eine mehrlagige Wicklung 33 aus Hochfrequenzlitze, die mit dem hochfrequenten Wechselstrom beaufschlagt wird. Die Induktionsspule 26 ist an ihrem dem freien Ende der Hülsenpartie 12 benachbarten Ende durch einen auf den Spulenkörper 32 aufgelegten Polschuh 34 abgeschlossen, der aus einem magnetisch leitenden und elektrisch nicht leitenden Material besteht und der eine Zentralöffnung 36 für den Durchtritt des Werkzeugs 16 aufweist. Bei dem gezeigten Ausführungsbeispiel ist der Polschuh 34 als Ringscheibe ausgebildet, die die Ringfläche 24 der Hülsenpartie 12 partiell von außen her übergreift und die zur Zentralöffnung 36 hin eine konische Eindrehung 38 aufweist. Der Polschuh 34 liegt auf der Ringfläche 24 auf und begrenzt zum Werkzeugschaft 14 hin einen den magnetischen Widerstand erhöhenden ringförmigen Luftspalt 40. Mit diesen Maßnahmen wird erreicht, daß die von der Spulenwicklung 33 kommenden Feldlinien 28 im Polschuh 34 konzentriert und unmittelbar über die Ringfläche 24 in die Hülsenpartie 12 eingeleitet werden. Der über die Ringfläche 24 der Hülsenpartie 12 überstehende Teil des Werkzeugs 16 wird auf diese Weise wirksam gegenüber dem elektromagnetischen Streufeld abgeschirmt. Dadurch wird erreicht, daß auch Werkzeuge aus elektrisch leitfähigem Material, beispielsweise aus Werkzeugstahl, verwendet werden können, ohne von den elektromagnetischen Streufeldem aufgeheizt zu werden. Letzteres ist notwendig, um ein zuverlässiges Ausspannen zu ermöglichen.

Zur weiteren Verbesserung des Wirkungsgrads ist die Induktionsspule 26 an ihrer dem Polschuh 34 gegenüberliegenden Stirnseite und an ihrer zylindrischen Mantelfläche mit je einer magnetischen Abschirmung 42,44 aus magnetisch leitendem und elektrisch nicht leitendem Werkstoff versehen. Die stirnseitige magnetische Abschirmung 42 ist dabei als Ringscheibe mit einer Durchtrittsöffnung 46 für die Innenwand 48 des Spulenkörpers 32 versehen, während die mantelseitige Abschirmung 44 als Zylinderkäfig ausgebildet ist. In den Abschirmungen 42,44 werden die Feldlinien 28 konzentriert, so daß die Streufeldverluste minimiert werden. Der Polschuh 34 und die Abschirmungen 42,44 bestehen aus einem weichmagnetischen, insbesondere aus weichferritischem, oxidkeramischem Werkstoff, in welchem wegen der elektrisch isolierenden Eigenschaften geringe oder keine Wirbelstromverluste auftreten.

Die Werkzeugaufnahme 10 und die Induktionsspule 26 sind zum Zwecke des Ein- und Ausspannens des Werkzeugs relativ zueinander bewegbar. Neben der die Induktionsspule 26 umfassenden Aufheizstation ist zweckmäßig eine nicht dargestellte Abkühlstation vorgesehen, in welcher der Einspannvorgang beschleunigt werden kann.

Zusammenfassend ist folgendes festzuhalten: Die Erfindung bezieht sich auf eine Vorrichtung zum Ein- und Ausspannen von Werkzeugen 16 in einer Werkzeugaufnahme 10. Die Werkzeugaufnahme 10 weist zu diesem Zweck eine an ihrem freien Ende offene Hülsenpartie 12 auf, die zur reibschlüssigen Aufnahme des Werkzeugschafts 14 bestimmt ist. Der Werkzeugschaft wird dabei in die Bohrung 20 der Hülsenpartie 12 eingeschrumpft. Zu diesem Zweck ist eine die Hülsenpartie der Werkzeugaufnahme 10 umfassende, mit einem hochfrequenten Wechselstrom beaufschlagbare Induktionsspule 26 zum Erwärmen der Hülsenpartie 12 vorgesehen. Um Streufelder zu vermeiden, mit denen eine unerwünschte Aufheizung des Werkzeugs 16 bewirkt werden könnte, wird gemäß der Erfindung vorgeschlagen, daß die Induktionsspule 26 an ihrer dem freien Ende der Hülsenpartie 12 benachbarten Stirnseite von einem eine zentrale Durchtrittsöffnung 36 für das Werkzeug 16 aufweisenden Polschuh 34 aus magnetisch leitendem und elektrisch nicht leitendem Werkstoff übergriffen ist.

## Patentansprüche

1. Vorrichtung zum Ein- und Ausspannen von einen Werkzeugschaft (14) aufweisenden Werkzeugen (16) in einer Werkzeugaufnahme (10), die eine an ihrem freien Ende (24) offene Hülsenpartie (12) aus elektrisch leitendem Werkstoff zur reibschlüssigen Aufnahme des Werkzeugschafts (14) aufweist, mit einer die Hülsenpartie (12) der Werkzeugaufnahme (10) umfassenden, mit einem vorzugsweise hochfrequenten Wechselstrom beaufschlagbaren, als Ring- oder Zylinderspule ausgebildeten Induktionsspule (26) zum Erwärmen der Hülsenpartie (12), **dadurch gekennzeichnet, daß** die Induktionsspule (26) an ihrer dem freien Ende der Hülsenpartie (12) benachbarten Stirnseite durch einen eine zentrale Durchtrittsöffnung (36) für das Werkzeug (16) aufweisenden Polschuh (34) aus magnetisch leitendem und elektrisch nicht leitendem Werkstoff abgeschlossen ist.

2. Vorrichtung nach Anspruch 1, **dadurch gekennzeichnet, daß** der Polschuh (34) das freie Ende (Ringfläche 24) der Hülsenpartie (12) teilweise übergreift.

3. Vorrichtung nach Anspruch 1 oder 2, **dadurch gekennzeichnet, daß** der Polschuh (34) gegen das freie Ende der Hülsenpartie (12) axial und/oder radial anliegt.

4. Vorrichtung nach einem der Ansprüche 1 bis 3, **dadurch gekennzeichnet, daß** die Durchtrittsöffnung (36) des Polschuhs (34) gegenüber dem Werkzeugdurchmesser Übermaß aufweist.

5. Vorrichtung nach einem der Ansprüche 1 bis 4, **dadurch gekennzeichnet, daß** der Polschuh einen zur Durchtrittsöffnung (36) hin partiell verjüngenden Querschnitt aufweist.

6. Vorrichtung nach einem der Ansprüche 1 bis 5, **dadurch gekennzeichnet, daß** der Polschuh (34) als Ringscheibe ausgebildet ist.

7. Vorrichtung nach Anspruch 6, **dadurch gekennzeichnet, daß** die Ringscheibe eine zur Durchtrittsöffnung (36) konzentrische konische Eindrehung aufweist.

8. Vorrichtung nach einem der Ansprüche 1 bis 5, **dadurch gekennzeichnet, daß** der Polschuh (34) durch mehrere speichenartig angeordnete Radialstege gebildet ist.

9. Vorrichtung nach einem der Ansprüche 1 bis 8, **dadurch gekennzeichnet, daß** die Induktionsspule (26) an ihrer dem Polschuh gegenüberliegenden Stirnseite und/oder an ihrer äußeren Mantelfläche eine magnetische Abschirmung (42,44) aus magnetisch leitendem und elektrisch nicht leitendem Werkstoff trägt.

10. Vorrichtung nach Anspruch 9, **dadurch gekennzeichnet, daß** die stirnseitige magnetische Abschirmung (42) als Ringscheibe mit einer Durchtrittsöffnung (46) für die Hülsenpartie (12) der Werkzeugaufnahme (10) ausgebildet ist.

11. Vorrichtung nach Anspruch 9, **dadurch gekennzeichnet, daß** die stirnseitige magnetische Abschirmung (42) durch mehrere speichenartig angeordnete Radialstege gebildet ist.

12. Vorrichtung nach einem der Ansprüche 9 bis 11, **dadurch gekennzeichnet, daß** die mantelseitige Abschirmung (44) als Zylinderkäfig ausgebildet ist.

13. Vorrichtung nach Anspruch 12, **dadurch gekennzeichnet, daß** der Zylinderkäfig in Umfangsrichtung geschlossen ist.

14. Vorrichtung nach Anspruch 12, **dadurch gekennzeichnet, daß** der Zylinderkäfig aus mehreren, in Umfangsrichtung im Abstand voneinander angeordneten, achsparallelen Stegen gebildet ist.

15. Vorrichtung nach einem der Ansprüche 1 bis 14, **dadurch gekennzeichnet, daß** der Polschuh aus weichmagnetischem, insbesondere aus einem weichferritischen oxidkeramischen Werkstoff besteht.

16. Vorrichtung nach einem der Ansprüche 1 bis 15, **dadurch gekennzeichnet, daß** die magnetische Abschirmung (42,44) aus weichmagnetischem, insbesondere aus einem weichferritischen oxidkeramischen Werkstoff besteht.

17. Vorrichtung nach einem der Ansprüche 1 bis 16, **dadurch gekennzeichnet, daß** der Polschuh (34) einen zur Durchtrittsöffnung (36) konzentrischen, ringförmigen Zentrieransatz zur Aufnahme der freien Enden der Hülsenpartie (12) und/oder zur Abstützung in der Ringöffnung der Induktionsspule (26) aufweist.

18. Vorrichtung nach einem der Ansprüche 1 bis 17, **dadurch gekennzeichnet, daß** die Induktionsspule (26) eine vorzugsweise mehrlagig gewickelte Spulenwicklung (33) aus einer Hochfrequenz-Litze aufweist.

19. Vorrichtung nach Anspruch 18, **dadurch gekennzeichnet, daß** die Spulenwicklung (33) luftgekühlt ist.

20. Vorrichtung nach einem der Ansprüche 1 bis 19, **dadurch gekennzeichnet, daß** die Induktionsspule (26) einen Spulenkörper (32) aus keramischem Material aufweist.

21. Vorrichtung nach einem der Ansprüche 1 bis 20, **dadurch gekennzeichnet, daß** die Hülsenpartie (12) eine Paßbohrung zur Aufnahme des Werkzeugschafts (14) aufweist, an die sich zum freien Ende hin ein Abschnitt größeren Durchmessers anschließt.

22. Vorrichtung nach einem der Ansprüche 1 bis 21, **dadurch gekennzeichnet, daß** die Hülsenpartie (12) eine zylindrische oder kegelstumpfförmige Mantelfläche (22) aufweist.

23. Vorrichtung nach einem der Ansprüche 1 bis 22, **dadurch gekennzeichnet, daß** die Werkzeugaufnahme (10) ein die Hülsenpartie (12) tragendes, mit einer drehenden Maschinenspindel verbindbares Kupplungsstück (18) aufweist.

24. Vorrichtung nach einem der Ansprüche 1 bis 23, **dadurch gekennzeichnet, daß** die Werkzeugaufnahme (10) und die Induktionsspule (26) relativ zueinander bewegbar sind.

## Claims

1. Device for clamping and releasing a work tool (16) having a work tool shaft (14) in a tool receptacle (10), the tool receptacle having a socket part (12) open on its free end (24) and comprising of electrically conductive material adapted for frictionally engaging reception of the tool shaft (14), with an induction coil (26) in the form of a ring or cylindrical coil encircling the socket part (12) of the tool receptacle (10) and adapted for heating the socket part (12) when energized preferably with high frequency alternating current, thereby characterized, that the end face of the induction coil (26) adjacent the free end of the socket part (12) is closed off by a pole shoe (34) exhibiting a central through-hole (36) for the tool (16) and comprised of a magnetically conductive and electrically non-conductive material.

2. Device according to Claim 1, thereby characterized, that the pole shoe (34) partially overlaps the free end (ring surface 24) of the socket part (12).

3. Device according to Claim 1 or 2, thereby characterized, that the pole shoe (34) lies axially and/or radially against the free end of the socket part (12).

4. Device according to one of Claims 1 through 3, thereby characterized, that the through hole (36) of the pole shoe (34) is larger in dimension than the tool diameter.

5. Device according to one of Claims 1 through 4, thereby characterized, that the pole shoe exhibits a cross section which partially narrows towards the through hole (36).

6. Device according to one of Claims 1 through 5, thereby characterized, that the pole shoe (34) is in the form of a ring disk.

7. Device according to Claim 6, thereby characterized, that the ring disk includes a conical recess concentric with the through hole (36).

8. Device according to one of Claims 1 through 5, thereby characterized, that the pole shoe (34) is formed of multiple radial segments arranged as spokes.

9. Device according to one of Claims 1 through 8, thereby characterized, that the induction coil (26) on its side opposite the pole shoe and/or on its outer circumference surface is provided with a magnetic shield (42, 44) of a magnetically conductive and electrically non-conductive material.

10. Device according to Claim 9, thereby characterized, that said magnetic shield (42) at the side opposite the pole shoe is formed as a ring disk with a through hole (46) for the socket part (12) of the tool receptacle (10).

11. Device according to Claim 9, thereby characterized, that said magnetic shield (42) at the side opposite the pole shoe is formed by multiple radial segments arranged like spokes.

12. Device according to one of Claims 9 through 11, thereby characterized, that the shield (44) at the outer circumference surface of the induction coil is in the form of a cylindrical cage.

13. Device according to Claim 12, thereby characterized, that the cylindrical cage is closed in the circumferential direction.

14. Device according to Claim 12, thereby characterized, that the cylindrical cage is comprised of multiple, axially parallel segments arranged spaced apart from each other in the circumference direction.

15. Device according to one of Claims 1 through 14, thereby characterized, that the pole shoe is comprised of a soft magnetic, preferably of a soft ferritic ceramic oxide material.

16. Device according to one of Claims 1 through 15, thereby characterized, that the magnetic shield (42, 44) is comprised of a soft magnetic, preferably a soft ferritic ceramic oxide material.

17. Device according to one of Claims 1 through 16, thereby characterized, that the pole shoe (34) exhibits a ring shaped centering shoulder or step concentric to the through hole (36) for receiving the free end of the socket part (12) and/or for supporting in the ring opening of the induction coil (26).

18. Device according to one of Claims 1 through 17, thereby characterized, that the induction coil (26) is comprised of coil windings (33) of a high frequency stranded wire, preferably wound multi-layered.

19. Device according to Claim 18, thereby characterized, that the coil winding (33) is air cooled.

20. Device according to one of Claims 1 through 19, thereby characterized, that the induction coil (26) is comprised of a bobbin or coil form (32) of ceramic material.

21. Device according to one of Claims 1 through 20, thereby characterized, that the socket part (12) includes a close fitting borehole for receiving the tool shaft (14), which towards the free end is in communication with a segment of larger diameter.

22. Device according to one of Claims 1 through 21, thereby characterized, that the socket part (12) includes a cylindrical or truncated conical outer circumference or outer surface (22).

23. Device according to one of Claims 1 through 22, thereby characterized, that the tool receptacle (10) includes a coupling piece (18) carrying the socket part (12) and connectable with a rotatable machine spindle.

24. Device according to one of Claims 1 through 23, thereby characterized, that the tool receptacle (10) and the induction coil (26) are moveable relative to each other.

## Revendications

1. Dispositif pour serrer et desserrer des outils (16), présentant une queue d'outil (14), dans un porte-outil (10) qui présente une partie de manchon (12) en matériau électriquement conducteur, ouverte à son extrémité libre (24) et destinée à recevoir en engagement par friction la queue d'outil (14), avec une bobine d'induction (26) pour échauffer la partie de manchon (12), bobine qui est réalisée sous forme de bobine annulaire ou cylindrique entourant la partie de manchon (12) du porte-outil (10) et pouvant être sollicitée par un courant alternatif de préférence à haute fréquence, **caractérisé en ce que** la bobine d'induction (26) est fermée, sur son côté frontal voisin de l'extrémité libre de la partie de manchon (12), par une pièce polaire (34) en matériau magnétiquement conducteur et électriquement non conducteur, présentant une ouverture de passage centrale (36) pour l'outil (16).

2. Dispositif selon la revendication 1, **caractérisé en ce que** la pièce polaire (34) recouvre partiellement l'extrémité libre (face annulaire 24) de la partie de manchon (12).

3. Dispositif selon la revendication 1 ou 2, **caractérisé en ce que** la pièce polaire (34) s'applique axialement et/ou radialement contre l'extrémité libre de la partie de manchon (12).

4. Dispositif selon l'une quelconque des revendications 1 à 3, **caractérisé en ce que** l'ouverture de passage (36) de la pièce polaire (34) présente une surcote par rapport au diamètre de l'outil.

5. Dispositif selon l'une quelconque des revendications 1 à 4, **caractérisé en ce que** la pièce polaire présente une section se rétrécissant partiellement en direction de l'ouverture de passage (36).

6. Dispositif selon l'une quelconque des revendications 1 à 5, **caractérisé en ce que** la pièce polaire (34) est réalisée sous forme de couronne.

7. Dispositif selon la revendication 6, **caractérisé en ce que** la couronne présente une gorge conique concentrique à l'ouverture de passage (36).

8. Dispositif selon l'une quelconque des revendications 1 à 5, **caractérisé en ce que** la pièce polaire (34) est formée par plusieurs nervures radiales disposées à la manière de rayons de bicyclette.

9. Dispositif selon l'une quelconque des revendications 1 à 8, **caractérisé en ce que** la bobine d'induction (26) porte, sur son côté frontal opposé à la pièce polaire et/ou sur sa face d'enveloppe extérieure, un blindage magnétique (42, 44) en matériau magnétiquement conducteur et électriquement non conducteur.

10. Dispositif selon la revendication 9, **caractérisé en ce que** le blindage magnétique frontal (42) est réalisé sous forme de couronne dotée d'une ouverture de passage (46) pour la partie de manchon (12) du porte-outil (10).

11. Dispositif selon la revendication 9, **caractérisé en ce que** le blindage magnétique frontal (42) est formé par plusieurs nervures radiales disposées à la manière de rayons de bicyclette.

12. Dispositif selon l'une quelconque des revendications 9 à 11, **caractérisé en ce que** le blindage d'enveloppe (44) est réalisé sous forme de cage cylindrique.

13. Dispositif selon la revendication 12, **caractérisé en ce que** la cage cylindrique est fermée en direction circonférentielle.

14. Dispositif selon la revendication 12, **caractérisé en ce que** la cage cylindrique est formée par plusieurs nervures parallèles à l'axe, disposées à distance les unes des autres en direction circonférentielle.

15. Dispositif selon l'une quelconque des revendications 1 à 14, **caractérisé en ce que** la pièce polaire est constituée d'un matériau magnétique doux, notamment d'un matériau céramique oxydé de coercitivité ferritique basse.

16. Dispositif selon l'une quelconque des revendications 1 à 15, **caractérisé en ce que** le blindage magnétique (42, 44) est constitué d'un matériau magnétique doux, notamment d'un matériau céramique oxydé de coercitivité ferritique basse.

17. Dispositif selon l'une quelconque des revendications 1 à 16, **caractérisé en ce que** la pièce polaire (34) présente un appendice de centrage annulaire, concentrique à l'ouverture de passage (36) et destiné à recevoir l'extrémité libre de la partie de manchon (12) et/ou au soutien dans l'ouverture annulaire de la bobine d'induction (26).

18. Dispositif selon l'une quelconque des revendications 1 à 17, **caractérisé en ce que** la bobine d'induction (26) présente un bobinage (33) constitué d'un fil toronné pour hautes fréquences, de préférence enroulé en plusieurs couches.

19. Dispositif selon la revendication 18, **caractérisé en ce que** le bobinage (33) est refroidi par air.

20. Dispositif selon l'une quelconque des revendications 1 à 19, **caractérisé en ce que** la bobine d'induction (26) présente un corps de bobine (32) en matériau céramique.

21. Dispositif selon l'une quelconque des revendications 1 à 20, **caractérisé en ce que** la partie de manchon (12) présente un trou d'ajustage destiné à recevoir la queue d'outil (14) et auquel se raccorde, en direction de l'extrémité libre, un tronçon de plus grand diamètre.

22. Dispositif selon l'une quelconque des revendications 1 à 21, **caractérisé en ce que** la partie de manchon (12) présente une face d'enveloppe (22) cylindrique ou tronconique.

23. Dispositif selon l'une quelconque des revendications 1 à 22, **caractérisé en ce que** le porte-outil (10) présente un élément d'accouplement (18) portant la partie de manchon (12) et pouvant être assemblé à une broche de machine rotative.

24. Dispositif selon l'une quelconque des revendications 1 à 23, **caractérisé en ce que** le porte-outil (10) et la bobine d'induction (26) peuvent être déplacés l'un par rapport à l'autre.
